# EUROPEAN PATENT APPLICATION

(11) **EP 4 439 196 A1**
(43) Date of publication of application: **02.10.2024**
(21) Application number: 24167249.2
(22) Date of filing: 28.03.2024
(51) Int. Cl.: G04B 45/00, G04B 19/12, B41J 2/01

(54) **WATCH COMPONENT AND METHOD OF DECORATING WATCH COMPONENT**

(30) Priority: 30.03.2023 JP 2023055532
(71) Applicant: Seiko Epson Corporation, Tokyo 160-8801 (JP)
(72) Inventor: NAKANISHI, Nobuhiko, Suwa-shi, 392-8502 (JP); FUJI, Tsubasa, Suwa-shi, 392-8502 (JP)
(74) Representative: Lewis Silkin LLP

(57) **Abstract**

A watch component includes a base material including a surface at which a desired design is expressed by dot-forming a binarized pattern with ink composed of metal nanoparticles.

## Description

The present application is based on, and claims priority from JP Application Serial Number 2023-055532, filed March 30, 2023, the disclosure of which is hereby incorporated by reference herein in its entirety.

### BACKGROUND

### 1. Technical Field

The present disclosure relates to a watch component and a method of decorating a watch component.

### 2. Related Art

JP-A-2000-111660 discloses a dial on which a character or an image is formed by subjecting a metal plate with plating to ink-jet printing.

In JP-A-2000-111660, a transparent ink reception layer is formed on a surface of the metal plate with plating, and hence manufacturing of a film or a printing plate is not required. With this, a variety of dials in small quantities can be produced in a short time at a low cost.

In JP-A-2000-111660, a character or an image is simply formed through ink-jet. Thus, it is difficult to express a design with a sense of luxury.

### SUMMARY

A watch component of the present disclosure includes a base material including a surface at which a desired design is expressed by dot-forming a binarized pattern with ink composed of metal nanoparticles.

In a method of decorating a watch component of the present disclosure, a desired design is expressed at a surface of a base material by dot-forming a binarized pattern with ink composed of metal nanoparticles, the surface being in a hydrophilic state or a hydrophobic state.

### BRIEF DESCRIPTION OF THE DRAWINGS

FIG. 1 is a front view illustrating a watch according to a first embodiment.
FIG. 2 is a cross-sectional view illustrating a main part of a dial of the first embodiment.
FIG. 3 is a view illustrating a decoration step of a dial of the first embodiment.
FIG. 4 is a front view illustrating an outline of the dial of the first embodiment.
FIG. 5 is a view illustrating dots formed by causing ink composed of metal nanoparticles to impact on a surface of a base material.
FIG. 6 is a view illustrating a manufacturing step of a dial of a second embodiment.
FIG. 7 is a front view illustrating an outline of the dial of the second embodiment.

### DESCRIPTION OF EMBODIMENTS

### First Embodiment

A watch 1 according to an embodiment of the present disclosure is described below with reference to the drawings.

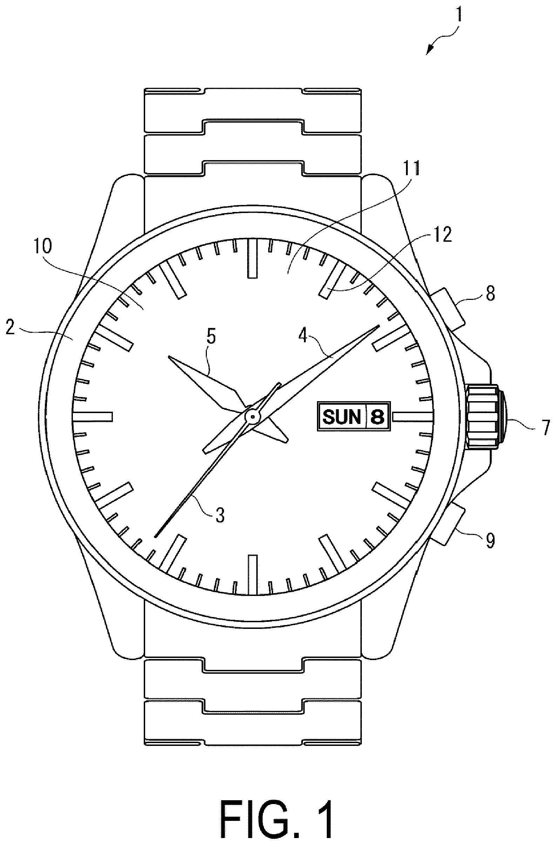

FIG. 1 is a front view illustrating the watch 1. In the present embodiment, the watch 1 is configured as a wristwatch worn on a wrist of a user.

As illustrated in FIG. 1, the watch 1 includes a metal case 2. Further, the case 2 includes, in the inside, a disk-shaped dial 10, a seconds hand 3, a minute hand 4, an hour hand 5, a crown 7, a button A 8, and a button B 9. Note that the dial 10 is an example of the watch component of the present disclosure.

### Dial

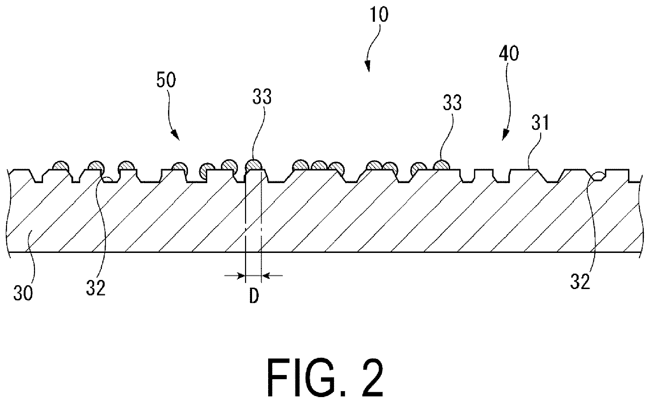

FIG. 2 is a cross-sectional view illustrating a main part of the dial 10. Note that FIG. 2 is a cross-sectional view taken along a base material 30 of the dial 10 in a thickness direction.

As illustrated in FIG. 2, the dial 10 is configured to include the base material 30. In the embodiment, a surface 31 of the base material 30 is not subjected to water repellent treatment. In other words, the surface 31 of the base material 30 is in a hydrophilic state or a hydrophobic state.

Herein, in the present disclosure, as evaluation on wettability, a state in which a contact angle formed between the surface and a tangent to a contour curve of a liquid droplet adhering to the surface is 40 degrees or less is defined as a hydrophilic state. A state in which the contact angle is approximately from 40 degrees to 90 degrees is defined as a hydrophobic state. Moreover, a state in which the contact angle exceeds 90 degrees is defined as a water-repellent state.

Further, in the present embodiment, the base material 30 is formed of any one of a seashell, a resin, and metal or a combination thereof. With this, the texture of those materials can be expressed. For example, the design in which a color tone changes with variation in light can be expressed by carving a pearl mother shell to form the base material 30. Further, a sense of luxury can be obtained by forming the base material 30 with noble metal such as platinum.

Further, a plurality of recessed portions 32 are formed in the surface 31 of the base material 30. In the present embodiment, the recessed portions 32 are formed by subjecting the surface 31 of the base material 30 to streak forming processing. More specifically, the surface 31 of the base material 30 is subjected to streak forming processing so that the recessed portions 32 are formed radially from the center.

In this manner, in the present embodiment, the recessed portions 32 are formed so that a first pattern 40 is displayed on the surface 31 of the base material 30.

Note that the recessed portions 32 are not limited to the above-mentioned configuration. For example, the recessed portions 32 may be formed by cutting, laser processing, chemical removal processing, polishing, forging and casting, or the like.

Further, dots 33 are formed on the surface 31 of the base material 30. In the present embodiment, ink composed of metal nanoparticles impacts on the surface 31 of the base material 30 in accordance with a binarized pattern. In this manner, the dots 33 are formed. With this, in the present embodiment, a second pattern 50 is displayed with the dots 33 on the surface 31 of the base material 30. More specifically, in accordance with the binarized pattern in which the dots are formed radially from the center, the ink composed of the metal nanoparticles is printed onto the surface 31 of the base material 30 through ink-jet printing. With this, the second pattern 50 is displayed. Note that the second pattern 50 expressed with the dots 33 is one example of a desired design of the present disclosure.

Herein, the ink composed of the metal nanoparticles is a composition in which the metal nanoparticles are dispersed in a dispersion medium. Further, the metal nanoparticles indicates metal particles each having a particle diameter falling within a range of 1 nm or more and 1 µm or less, and may be configured to contain any one of gold, silver, copper, and platinum. With this, the second pattern 50 having luster can be expressed, and a more luxurious design can be expressed.

Further, in the present embodiment, the dots 33 are formed to have a diameter D of 11 µm or more and 60 µm or less, and may be formed to have the diameter D of 20 µm or more and 40 µm or less.

In general, even when a pattern is expressed with dots each having a diameter of 10 µm or less, which is an excessively small dot diameter, it is less likely to be visually recognized that the pattern is expressed with the dots. In the present embodiment, the dots 33 are formed so that the diameter D is 11 µm or more and 60 µm or less. With this, the second pattern 50 with the visually-recognizable and fine dots 33 can be expressed.

### Method of Decorating Dial

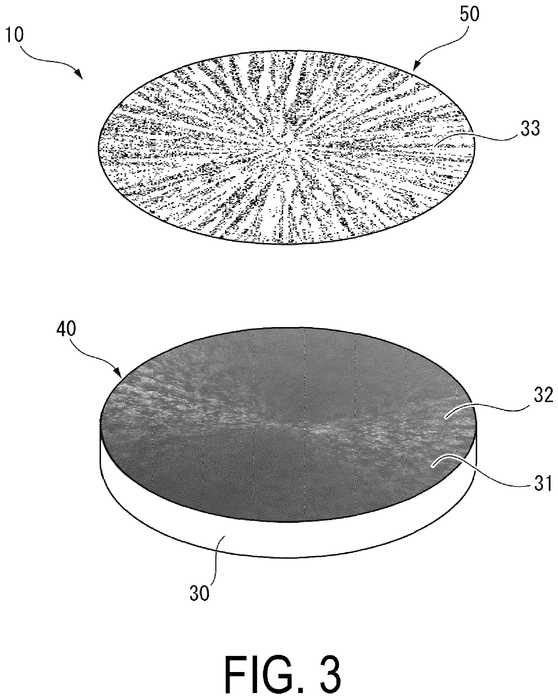

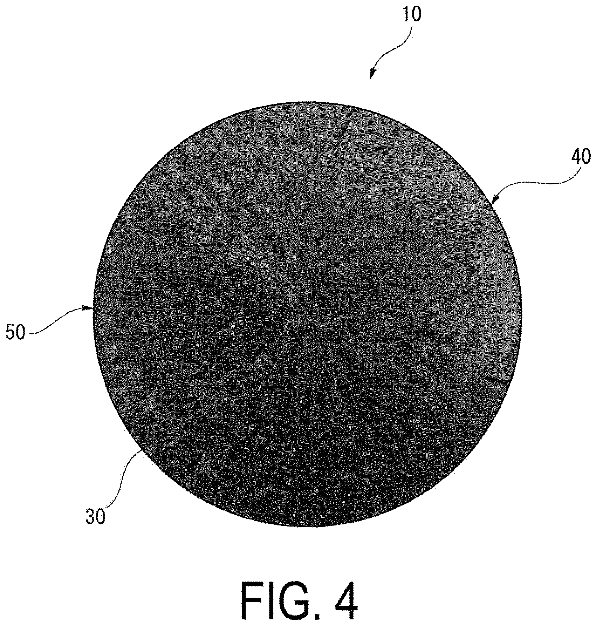

FIG. 3 is a view illustrating a decoration step of the dial 10, and FIG. 4 is a front view illustrating an outline of the dial 10.

As illustrated in FIG. 3, first, the recessed portions 32 are formed by subjecting the surface 31 of the base material 30 to streak forming processing and punching to display the first pattern 40.

Next, in accordance with the binarized pattern that is prepared in advance, the surface 31 of the base material 30, which is in a hydrophilic state or a hydrophobic state, is subjected to ink-jet printing with the ink composed of the metal nanoparticles. With this, the dots 33 are formed to display the second pattern 50. With this, a desired design can be expressed.

Further, finally, in a lapping step, a transparent film is applied on the surface 31 of the base material 30 on which the dots 33 are formed, and the transparent film is polished. With this, in a finishing step, the transparent film applied to the surface 31 of the base material 30 is polished. Thus, the design aesthetics can further be improved.

The dial 10 is decorated as described above. With this, as illustrated in FIG. 4, a desired design with the second pattern 50 can be expressed.

Note that, in the present embodiment, even when the same first pattern 40 is expressed on the base material 30, the second pattern can easily be changed by changing the binarized pattern. Thus, a dial having an impression different from FIG. 4 can easily be provided.

Further, in the present embodiment, both the first pattern 40 expressed on the base material 30 and the second pattern 50 displayed by dot-forming the binarized pattern can be recognized visually. Thus, an innovative design with complexity can be expressed.

Moreover, in the present embodiment, the second pattern 50 is dot-formed on the surface 31 of the base material 30, which is in a hydrophilic state or a hydrophobic state, with the ink composed of the metal nanoparticles having luster. Thus, an external appearance having intricacy, the design aesthetics, and a sense of luxury can be obtained.

Further, in the present embodiment, as described above, the first pattern 40 is displayed by forming the recessed portions 32 radially with respect to the surface 31 of the base material 30, and the second pattern 50 is displayed by forming the dots 33 in accordance with the binarized pattern in which the dots are formed radially. In other words, in the present embodiment, the first pattern 40 and the second pattern 50 are associated with each other. With this, as illustrated in FIG. 4, the first pattern 40 is emphasized by the second pattern 50. Thus, the design that highlights the first pattern 40 can be expressed.

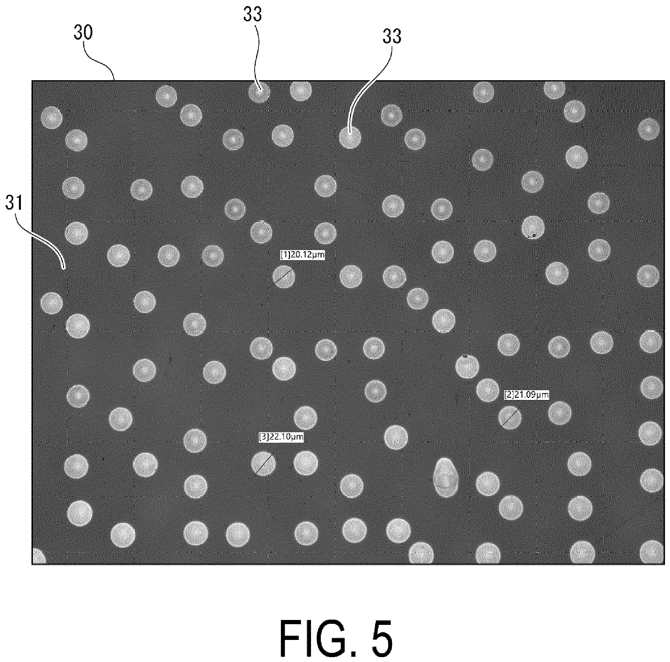

FIG. 5 is a view illustrating the dots 33 formed by causing the ink composed of the metal nanoparticles to impact on the surface 31 of the base material 30.

As illustrated in FIG. 5, the ink composed of the metal nanoparticles impacts on the surface 31 of the base material 30 to form the dots 33. Such dots each has a diameter D of approximately 20 µm. In this manner, in the present embodiment, the dots 33 are formed to have a size of 11 µm or more and 60 µm or less, and may be formed to have a size of 20 µm or more and 40 µm or less. Note that this is not limitative when impact positions of the ink overlap with each other. In other words, in the present embodiment, at the position at which the ink impact positions do not overlap with each other, the dots 33 are formed to have the diameter D of 11 µm or more and 60 µm or less, and may be formed to have the diameter D of 20 µm or more and 40 µm or less.

The reason for this is assumed that, in the present embodiment, the ink is composed of the metal nanoparticles having an extremely small particle diameter and the surface 31 of the base material 30 is not subjected to water repellent treatment. Consequently, the ink impacting on the surface 31 of the base material 30 spreads to a moderate degree. In other words, the ink composed of the metal nanoparticles having an extremely small particle diameter impacts on the surface 31 of the base material 30 in a hydrophilic state or a hydrophobic state. With this, the dots 33 can be formed to have the diameter D of 11 µm or more and 60 µm or less.

In the present embodiment, the second pattern 50 that is visually recognizable and fine can be expressed by forming the dots 33 described above.

Moreover, when the dots 33 are formed to have the diameter D of 20 µm or more and 40 µm or less, variation of the diameter D of the dots 33 formed by an impact of the ink is reduced. Thus, a more intricate design can be expressed.

### Operational Effects of First Embodiment

According to the present embodiment described above, the following effects can be achieved.

In the present embodiment, the binarized pattern is dot-formed on the surface 31 of the base material 30, which is in a hydrophilic state or a hydrophobic state, with the ink. Further, the dots 33 are formed to have the diameter D of 11 µm or more and 60 µm or less. With this, a design can be expressed with the visually-recognizable and fine dots 33. In this case, in the present disclosure, the ink is composed of the metal nanoparticles. Thus, the dots formed in accordance with the binarized pattern can be provided with luster. Thus, an external appearance having intricacy, the design aesthetics, and a sense of luxury can be obtained.

In the present embodiment, the base material 30 is formed of any one of a seashell, a resin, and metal or a combination thereof. Thus, the texture of those materials can be expressed.

In the present embodiment, the metal nanoparticles for dot-forming the second pattern 50 is configured to contain any one of gold, silver, copper, and platinum. Thus, the second pattern 50 having luster can be expressed, and a more luxurious design can be expressed.

In the present embodiment, the diameter D of the dot 33 formed by causing the ink composed of the metal nanoparticles to impact on the surface 31 of the base material 30 is 20 µm or more and 40 µm or less. Thus, variation of the diameter D of the dots 33 is reduced, and a more intricate design can be expressed.

In the present embodiment, in the finishing step, the surface 31 of the base material 30 is polished. Thus, the design aesthetics can further be improved.

In the present embodiment, the first pattern 40 and the second pattern 50 are associated with each other, and the second pattern 50 is dot-formed to emphasize the first pattern 40. Thus, the design that highlights the first pattern 40 can be expressed.

### Second Embodiment

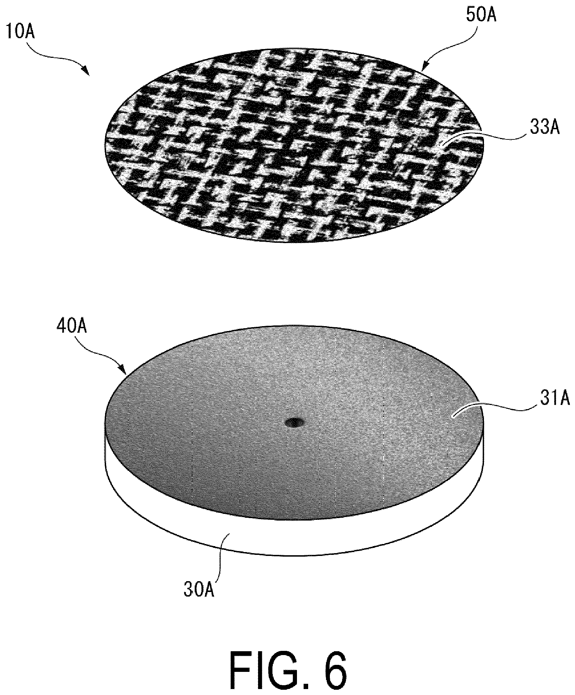

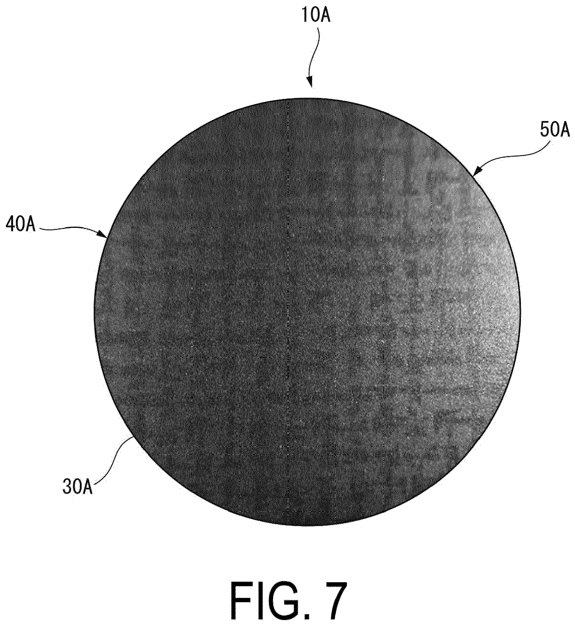

Next, a second embodiment of the present disclosure is described with reference to FIG. 6 and FIG. 7. The second embodiment is different from the first embodiment described above in that a first pattern 40A is displayed in a matte finish and a second pattern 50A is displayed by forming dots 33A in accordance with a binarized pattern in which dots are formed in a lattice shape.

Note that, in the second embodiment, the same or similar components to those of the first embodiment are denoted with the same reference symbols, and the description is omitted or simplified.

FIG. 6 is a view illustrating a decoration step of a dial 10A of the second embodiment, and FIG. 7 is a front view illustrating an outline of the dial 10A.

As illustrated in FIG. 6 and FIG. 7, in the present embodiment, the first pattern 40A in a matte finish is displayed on a surface 31A of a base material 30A. Moreover, the ink composed of the metal nanoparticles impacts on the surface 31A of the base material 30A on which the first pattern 40A is displayed, in accordance with the binarized pattern in a lattice shape. With this, the dots 33A are formed to display the second pattern 50A.

With this, as illustrated in FIG, 7, the complex design in which the first pattern 40A in a matte finish is blurred by the second pattern 50A in a lattice shape can be expressed.

Moreover, in the present embodiment, the dots 33A forming the second pattern 50A are formed with gradation. With this, the design having the part where the first pattern 40 in a lattice shape is recognized relatively clearly and the part where the first pattern 40 in a lattice finish is recognized relatively unclearly can be expressed.

### Operational Effects of Second Embodiment

According to the present embodiment described above, the following effects can be achieved.

In the present embodiment, the first pattern 40A in a matte finish is displayed on the surface 31A of the base material 30A, and the second pattern 50A is displayed by forming the dots 33A in accordance with the binarized pattern in a lattice shape. Thus, the complex design in which the first pattern 40A in a matte finish is blurred by the second pattern 50A in a lattice shape can be expressed.

In the present embodiment, the dots 33A forming the second pattern 50A are formed with gradation. Thus, the design having the part where the first pattern 40A in a matte finish is recognized relatively clearly and the part where the first pattern 40A in a matte finish is recognized relatively unclearly can be expressed.

### Modification Examples

Note that the present disclosure is not limited to each of the embodiments described above, and may be modified and changed as far as the advantages of the present disclosure can be achieved.

In each of the embodiments described above, the first pattern 40, 40A and the second pattern 50A are displayed on a base body of the base material 30, 30A formed of any one of a seashell, a resin, and metal or a combination thereof, but this is not limitative. For example, the base material may be subjected to plating treatment or coating with a coating material. With this, luster and a color of the base material can freely be expressed.

In the first embodiment described above, the first pattern 40 is displayed by forming the recessed portions 32 in the surface 31 of the base material 30, but this is not limitative. For example, the first pattern may be displayed by printing or transferring the first pattern with respect to the surface of the base material.

Moreover, the base material is formed of a resin having transparency such as polycarbonate, or glass, and the first pattern is displayed on a movement or the like arranged on the back side of the dial. With this, the first pattern may be displayed in a visually recognizable manner through the base material. With this, the design expressed with the first pattern and the second pattern has a sense of depth. Thus, an innovative design with more complexity can be expressed.

Note that, in this case, first, the ink may impact on the surface of the base material to form the dots. With this, the second pattern may be displayed. Subsequently, the first pattern may be displayed on the member arranged on the back side of the base material. After that, the watch component of the present disclosure and the member arranged on the back side of the base material may be assembled with each other.

In each of the embodiments described above, the design expressed with the first pattern 40, 40A and the second pattern 50, 50A may be configured to change in accordance with a visual recognition angle. More specifically, with gradation of the dots 33, 33A forming the second pattern 50, 50A, the design may be configured to change in accordance with a visual recognition angle. With this, the design expressed with the first pattern and the second pattern changes in accordance with a visual recognition angle. Thus, an innovative design with more complexity can be expressed.

Further, in each of the embodiments described above, a dark color may be added to the base material 30, 30A, and the second pattern 50, 50A may be displayed with ink having metallic luster. With this, a deep color is added to the base material 30, 30A, and hence the second pattern 50, 50A having metallic luster can be highlighted. In particular, when the base material is black, and the second pattern is displayed with ink configured to contain gold or silver, a luxurious design such as gold leaf lacquerware can be expressed.

In each of the embodiments described above, the first pattern 40 is displayed on the base material 30, 30A, but this is not limitative. For example, a case in which the first pattern is not displayed on the base material is also included in the present disclosure.

In each of the embodiments described above, the watch component of the present disclosure is configured as the dial 10, 10A, but this is not limitative. For example, the watch component of the present disclosure may be configured as one of a case, a dial ring, a glass edge, a movement and a main plate thereof, a hand, an abbreviation, and an oscillating weight.

### Overview of Present Disclosure

A watch component of the present disclosure includes a base material including a surface at which a desired design is expressed by dot-forming a binarized pattern with ink composed of metal nanoparticles.

In the present disclosure, the binarized pattern is dot-formed on the surface with the ink. Thus, a design can be expressed with the fine dots. In this case, in the present disclosure, the ink is composed of the metal nanoparticles. Thus, the dots formed in accordance with the binarized pattern can be provided with luster. Thus, an external appearance having intricacy, the design aesthetics, and a sense of luxury can be obtained.

In the watch component of the present disclosure, a diameter of a dot may be 11 µm or more and 60 µm or less, the dot being formed by causing the ink composed of the metal nanoparticles to impact on the surface.

With this, the dots each having a diameter of 1 µm or more and 60 µm or less are formed on the surface. Thus, a design can be expressed with the visually-recognizable and fine dots. Thus, an external appearance having intricacy, the design aesthetics, and a sense of luxury can be obtained.

In the watch component of the present disclosure, the surface of the base material may be in a hydrophilic state or a hydrophobic state.

With this, the binarized pattern is dot-formed on the surface, which is in a hydrophilic state or a hydrophobic state, with the ink. Thus, a design can be expressed with the visually-recognizable and fine dots.

In the watch component of the present disclosure, the base material may be formed of any one of a seashell, a resin, and metal or a combination thereof.

With this, the base material is formed of any one of a seashell, a resin, and metal or a combination thereof. Thus, the texture of those materials can be expressed.

In the watch component of the present disclosure, the base material may be subjected to plating treatment or coating with a coating material.

With this, the base material is subjected to plating treatment or coating with a coating material. Thus, luster and a color of the vase material can freely be expressed.

In the watch component of the present disclosure, the metal nanoparticles may be configured to contain any one of gold, silver, copper, and platinum.

With this, the metal nanoparticles for dot-forming the second pattern is configured to contain any one of gold, silver, copper, and platinum. Thus, the second patter having luster can be expressed, and a more luxurious design can be expressed.

In the watch component of the present disclosure, a diameter of a dot may be 20 µm or more and 40 µm or less, the dot being formed by causing the ink composed of the metal nanoparticles to impact on the surface.

With this, variation of the diameter of the dots formed by an impact of the ink is reduced. Thus, a more intricate design can be expressed.

In the watch component of the present disclosure, a deep color may be added to the base material, and a desired design may be expressed with the ink having metallic luster.

With this, a deep color is added to the base material, and hence the dots having metallic luster can be highlighted. Thus, a luxurious design such as gold leaf lacquerware can be expressed.

In a method of decorating a watch component of the present disclosure, a desired design is expressed on a surface of a base material by dot-forming a binarized pattern with ink composed of metal nanoparticles, the surface being in a hydrophilic state or a hydrophobic state.

In the present disclosure, the binarized pattern is dot-formed on the surface, which is in a hydrophilic state or a hydrophobic state, with the ink. Thus, a design can be expressed with the visually-recognizable and fine dots. In this case, in the present disclosure, the ink is composed of the metal nanoparticles. Thus, the dots formed in accordance with the binarized pattern can be provided with luster. Thus, an external appearance having intricacy, the design aesthetics, and a sense of luxury can be obtained.

The method of decorating a watch component of the present disclosure may include a lapping step for applying a transparent film at the surface of the base material on which dots are formed and polishing the transparent film.

With this, in the finishing step, the transparent film applied to the surface of the base material is polished. Thus, the design aesthetics can further be improved.

## Claims

1. A watch component comprising:
a base material including a surface at which a desired design is expressed through dot formation with ink composed of metal nanoparticles.

2. A watch component according to claim 1, wherein
a diameter of a dot is 11 µm or more and 60 µm or less, the dot being formed by causing the ink composed of the metal nanoparticles to impact on the surface.

3. A watch component according to claim 2, wherein
the surface of the base material is in a hydrophilic state or a hydrophobic state.

4. A watch component according to claim 2, wherein
the base material is formed of any one of a seashell, a resin, and metal or a combination thereof.

5. A watch component according to claim 2, wherein
the base material is subjected to plating treatment or coating with a coating material.

6. A watch component according to claim 2, wherein
the metal nanoparticles are configured to contain any one of gold, silver, copper, and platinum.

7. A watch component according to claim 2, wherein
a diameter of a dot is 20 µm or more and 40 µm or less, the dot being formed by causing the ink composed of the metal nanoparticles to impact on the surface.

8. A watch component according to claim 2, wherein
the watch component is configured as a dial, and
a deep color is added to the base material, and a desired design is expressed with the ink having metallic luster.

9. A method of decorating a watch component, wherein
a desired design is expressed at a surface of a base material by dot-forming a binarized pattern with ink composed of metal nanoparticles, the surface being in a hydrophilic state or a hydrophobic state.

10. A method of decorating a watch component according to claim 9, comprising:
a lapping step for applying a transparent film at the surface of the base material on which dots are formed and polishing the transparent film.
